# EUROPÄISCHE PATENTSCHRIFT

(11) **EP 3 958 651 B1**
(45) Veröffentlichungstag und Bekanntmachung des Hinweises auf die Patenterteilung: **22.04.2026**
(21) Anmeldenummer: 21189866.3
(22) Anmeldetag: 10.12.2020
(51) Int. Cl.: H05B 3/50, B60H 1/22, F24H 3/04, F24H 9/18

(54) **ELEKTRISCHE HEIZVORRICHTUNG**
ELECTRIC HEATING DEVICE
DISPOSITIF DE CHAUFFAGE ÉLECTRIQUE

(30) Priorität: 27.12.2019 DE 102019220591
(43) Veröffentlichungstag der Anmeldung: 23.02.2022
(62) Teilanmeldung aus: 20213131.4
(73) Patentinhaber: Eberspächer catem GmbH & Co. KG, 76863 Herxheim (DE)
(72) Erfinder: Niederer, Michael, 76889 Kapellen-Drusweiler (DE)
(74) Vertreter: Grünecker Patent- und Rechtsanwälte PartG mbB

(56) Entgegenhaltungen:
- EP-A1- 2 440 004
- EP-A1- 2 772 820
- EP-A1- 3 228 950
- DE-U1- 202019 005 223

## Beschreibung

Die vorliegende Erfindung betrifft eine elektrische Heizvorrichtung mit einem Gehäuse mit einer Trennwand, die eine Anschlusskammer von einer Heizkammer zur Abgabe von Wärme trennt und von der zumindest eine PTC-Heizeinrichtung als Heizrippe in Richtung auf die Heizkammer abragt. Die PTC-Heizeinrichtung hat zumindest ein PTC-Element und zur Bestromung des PTC-Elementes mit unterschiedlicher Polarität mit diesem elektrisch leitend verbundene Leiterbahnen, die in der Anschlusskammer elektrisch angeschlossen sind. Des Weiteren ist als Teil der elektrischen Heizvorrichtung ein Temperaturfühler vorgesehen, der datenmäßig mit einer Steuereinrichtung verbunden und in einer Temperaturfühleraufnahme abgedichtet aufgenommen ist, die in einer die Heizkammer begrenzenden Wand ausgeformt ist.

Eine elektrische Heizvorrichtung mit einer Trennwand, von der PTC-Heizeinrichtungen in die Heizkammer hineinragen, ist aus EP 3 334 242 A1 bekannt. Diese frühere Anmeldung der vorliegenden Anmelderin offenbart auch eine Steuereinrichtung zur Steuerung des Leistungsstromes der PTC-Heizeinrichtungen. Eine elektrische Heizvorrichtung mit einem Temperaturfühler zur Bestimmung der tatsächlichen Temperatur in der Heizeinrichtung ist aus EP 2 440 004 A, EP 3 228 950 A1 oder EP 2 772 820 A1 bekannt.

Die vorliegende Erfindung will eine elektrische Heizeinrichtung der eingangs genannten Art schaffen, die in verbesserter Weise eine abdichtende Aufnahme des Temperaturfühlers in der Wand ermöglicht.

Zur Lösung dieser Aufgabenstellung wird mit der vorliegenden Erfindung eine elektrische Heizvorrichtung mit den Merkmalen von Anspruch 1 vorgeschlagen.

Bei dieser elektrischen Heizvorrichtung ist in an sich bekannter Weise der Temperaturfühler datenmäßig mit einer Steuereinrichtung verbunden, die den Leistungsstrom des PTC-Elementes innerhalb der Heizkammer steuert, sodass die gewünschte Wärmemenge in der elektrischen Heizvorrichtung an das zu erwärmende Medium abgegeben wird, und zwar durch Vorgaben der Steuereinrichtung. Diese Steuereinrichtung ist üblicherweise in baulicher Einheit an der elektrischen Heizvorrichtung vorgesehen.

Das Gehäuse ist üblicherweise ein Gehäuse zur Erwärmung eines flüssigen Mediums. Die elektrische Heizvorrichtung ist insbesondere eine Heizvorrichtung zur Erwärmung von flüssigen Medien in einem Kraftfahrzeug. So ist die Heizkammer üblicherweise abgedichtet und lediglich über Ein- und Auslassstutzen nach außen offen, durch welche das zu erwärmende Medium in die Heizkammer eingeleitet und aus dieser heraus geleitet wird. Die Trennwand verhindert den Übertritt von zu erwärmendem Fluid von der Heizkammer in die Anschlusskammer. Die Bestromung der PTC-Heizeinrichtung erfolgt üblicherweise durch eine integrierte Steuereinrichtung, die einen Leistungsstromstecker und einen Steuerstromstecker an ihrer Außenseite aufweist, um den Leistungsstrom bzw. den Steuerstrom in die elektrische Heizvorrichtung, spezielle die Steuereinrichtung, einzubringen. Die Steuereinrichtung hat üblicherweise eine bestückte Leiterplatte. Durch diese wird der Steuerstrom gesteuert. Die Steuereinrichtung kann ferner eine Kontaktierungseinrichtung aufweisen, die in die Anschlusskammer hineinragende Kontaktzungen zunächst elektrisch anschließt, gegebenenfalls gruppiert und üblicherweise an anderer Stelle die entsprechende Kontaktzunge daten- bzw. strommäßig mit der zuvor erwähnten Leiterplatte verbindet.

Erfindungsgemäß hat die elektrische Heizvorrichtung eine Temperaturfühleraufnahme, die in einer die Heizkammer begrenzenden Wand ausgeformt ist. Bei dieser Wand kann es sich um jede die Heizkammer begrenzende Wand des Gehäuses handeln. Bevorzugt wird die Temperaturfühleraufnahme allerdings in der zuvor erwähnten Trennwand ausgebildet, sodass der Temperaturfühler in gleicher Richtung in Richtung auf die Anschlusskammer von der Trennwand hervorragt, wie Kontaktzungen, die üblicherweise an den freien, in die Anschlusskammer ragenden Enden der PTC-Heizeinrichtungen vorgesehen sind, um die jeweilige PTC-Heizeinrichtung in der Anschlusskammer elektrisch anzuschließen.

Nach der vorliegenden Erfindung ist mindestens ein Temperaturfühlerkontaktelement des Temperaturfühlers in einer Leiterplatte aufzunehmen, die in der Anschlusskammer angeordnet ist. Das Temperaturfühlerkontaktelement liegt dementsprechend in der Anschlusskammer frei. Bei der Anschlusskammer handelt es sich regelmäßig um denjenigen Teil der elektrischen Heizvorrichtung, in dem auch die Kontaktzungen der einzelnen PTC-Heizeinrichtungen elektrisch angeschlossen sind. Danach ragen diese Kontaktzungen bzw. die Temperaturfühlerkontaktelemente in gleicher Ausrichtung in die Anschlusskammer hinein und sind dort kontaktiert. Diese Lösung bietet den Vorteil, dass durch eine einheitliche Steckrichtung sowohl die PTC-Heizeinrichtungen als auch der Temperaturfühler elektrisch mittelbar oder unmittelbar mit der Leiterplatte steckkontaktiert werden kann.

Gemäß einer bevorzugten Weiterbildung ist der Temperaturfühler in der Temperaturfühleraufnahme gleitend vorgesehen. Er wird dementsprechend nicht mit der Temperaturfühleraufnahme verschraubt oder in anderer Weise fest mit der Wand verbunden, beispielsweise durch Kleben. Vielmehr ist es dem Temperaturfühler möglich, ohne Verlust der Abdichtung zwischen der Temperaturfühleraufnahme und dem Temperaturfühler in axialer Richtung, d. h. Einbringrichtung des Temperaturfühlers in die Temperaturfühleraufnahme, bewegt zu werden. Diesem Vorschlag liegt die Konzeption zugrunde, dass sich beispielsweise eine Schraubverbindung zur Befestigung des Temperaturfühlers durch in dem Fahrzeug wirkende Vibrationen lösen kann.

Bei der erfindungsgemäßen Lösung ist üblicherweise eine Dichtung des Temperaturfühlers gegen eine zylindrische Wand abgestützt und kann sich im Einbauzustand relativ zu dieser Wand axial verschieben, ohne dass die Dichtwirkung verloren geht. Gemäß einer bevorzugten Weiterbildung hat dieHeizvorrichtung eine mit dem Temperaturfühler zusammenwirkende Abstützung. Diese Abstützung ist so vorgesehen, dass sie ein Herausgleiten des Temperaturfühlers aus der Temperaturfühleraufnahme verhindert. Die Abstützung hat üblicherweise einen Anschlag, gegen den der Temperaturfühler beim maximalen Herausgleiten aus der Temperaturfühleraufnahme anschlägt, sodass der Temperaturfühler in der abgedichteten Lage innerhalb der Temperaturfühleraufnahme verbleibt. Die Abstützung wirkt dabei üblicherweise unmittelbar gegen das Gehäuse des Temperaturfühlers. Dieses kann beispielsweise in Einbringrichtung über einen Abstützungsvorsprung verlängert sein, der die sonstigen funktionalen Elemente des Temperaturfühlers, insbesondere ein Temperaturfühlerkontaktelement, überragt, über das das Messsignal des Kontaktfühlers abgeleitet wird.

So erfolgt die Abstützung des Temperaturfühlers bevorzugt auf einer der Heizkammer und der Trennwand gegenüberliegenden Seite. Nach der vorliegende Erfindung ist das Temperaturfühlerkontaktelement mit einer Leiterplatte verbunden und in dieser aufgenommen. So befindet sich beispielsweise die Abstützung an einer Seite der Leiterplatte, die der Trennwand und der Heizkammer gegenüberliegt.

Gemäß einer bevorzugten Weiterbildung hat der Temperaturfühler einen Haltevorsprung, der die Leiterplatte durchragt und in einer Führungsbohrung derselben aufgenommen ist. Diese Führungsbohrung ist als üblicherweise umfänglich geschlossene Bohrung in der Leiterplatte ausgespart. Die Führungsbohrung führt den Haltevorsprung, sodass beim Fügen des Temperaturfühlerkontaktelementes mit Leitungsbahnen der Leiterplatte durch Relativbewegung von Temperaturfühler und Leiterplatte zunächst die Leiterplatte, geführt durch den Eingriff des Haltevorsprungs in der Führungsbohrung, relativ zu dem Temperaturfühler und dem davon abragenden Temperaturfühlerkontaktelement positioniert und geführt wird. Im Rahmen der Fügebewegung erfolgt dementsprechend zwangsläufig eine lagegenaue Positionierung des Temperaturfühlerkontaktelementes relativ zu der Kontaktzungenaufnahme der Leiterplatte.

Gemäß einer bevorzugten Weiterbildung der vorliegenden Erfindung erfolgt die Abstützung des Temperaturfühlers an einem Gehäusedeckel, der eine die Leiterplatte aufnehmende Kammer abdeckt. Die Leiterplatte befindet sich dabei üblicherweise zwischen einem die Trennwand ausbildenden Gehäuseoberteil und dem besagten Gehäusedeckel. Die zuvor erwähnte Kammer ist demnach bevorzugt die Anschlusskammer. Die Abstützung erfolgt bevorzugt über den Haltevorsprung.

Zur Verminderung denkbarer elastischer Verformungen des Gehäusedeckels, die die Abstützung des Temperaturfühlers negativ beeinflussen können, sollte die Abstützung an dem Gehäusedeckel relativ nahe zu dem Rand des Gehäusedeckels vorgesehen sein, dort wo der Gehäusedeckel üblicherweise mit dem Gehäuseoberteil verbunden ist. So wird die an dem Gehäusedeckel vorgesehene Abstützung durch Bereiche des Gehäuseoberteils verstärkt. Der Gehäusedeckel ist üblicherweise formschlüssig mit dem Gehäuseoberteil verbunden. Dies kann durch Umbördeln oder eine Rastverbindung erfolgen. Der Gehäusedeckel ist üblicherweise ein Blecherzeugnis, welches durch Stanzen auf Form geschnitten und durch Biegen zumindest mit einem umfänglichen Rand versehen wurde, der das Gehäuseoberteil umfänglich umgibt. Dabei bildet der Gehäusedeckel in der Regel randnah zu einer Gehäusedeckeloberfläche eine umlaufende Nut zur Aufnahme einer Dichtung zwischen dem Gehäuseoberteil und dem Gehäusedeckel aus. Die Gehäusedeckeloberfläche kann zur Ausformung von Versteifungsrippen stanzbearbeitet sein.

Zur Verringerung der durch den Temperaturfühler eingenommenen Dimensionen wird gemäß einer bevorzugten Weiterbildung der vorliegenden Erfindung vorgeschlagen, den Gehäusedeckel mit einem in Richtung auf den Temperaturfühler vorspringenden Abstützungsvorsprung zu versehen, der mit dem zuvor bereits erwähnten Haltevorsprung des Temperaturfühlers zusammenwirkt, um ein unbeabsichtigtes Herausgleiten desselben aus der Temperaturfühleraufnahme zu verhindern.

Weitere Einzelheiten und Vorteile der vorliegenden Erfindung ergeben sich aus der nachfolgenden Beschreibung eines Ausführungsbeispiels in Verbindung mit der Zeichnung. In dieser zeigen:
- Fig. 1: eine Explosionsdarstellung eines Ausführungsbeispiels einer elektrischen Heizvorrichtung;
- Fig. 2: eine Draufsicht von oben auf das Steuergehäuse;
- Fig. 3: eine Längsschnittansicht entlang der Linie III-III gemäß der Darstellung in Fig. 2;
- Fig. 4: eine Längsschnittansicht entlang der Linie IV-IV gemäß der Darstellung in Fig. 2, und
- Fig. 5: eine perspektivische vergrößerte Draufsicht auf die bestückte Leiterplatte des Ausführungsbeispiels mit Teilen des Temperaturfühlers,

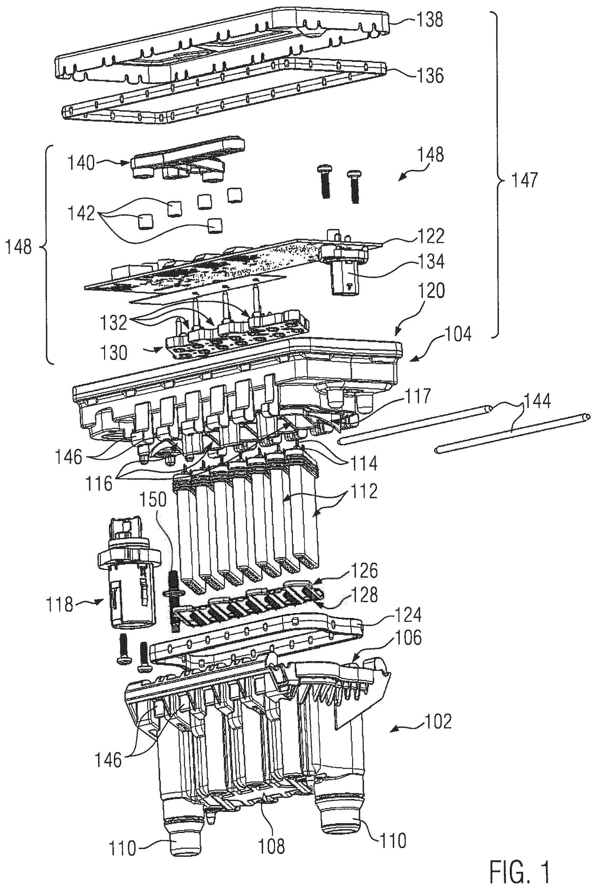

Die Figur 1 zeigt ein Ausführungsbeispiel einer elektrischen Heizvorrichtung 100 mit einem mehrteiligen Gehäuse, das ein aus Kunststoff ausgebildetes Gehäuseunterteil 102 und ein mittels Druckguss einteilig aus Metall ausgebildetes Gehäuseoberteil 104 umfasst.

Das Gehäuseunterteil 102 ist wannenförmig ausgebildet und umschließt eine Heizkammer 106, zu der von einem Boden 108 abragende Ein- und Auslassstutzen 110 vorgesehen sind. Diese Ein- und Auslassstutzen 110 sind einteilig mit dem Gehäuseunterteil 102 mittels Spritzgießen ausgeformt.

Die Ein- und Auslassstutzen 110 überragen den Boden 108. Sie gehen rechtwinklig von einer durch den Boden 108 gebildeten ebenen Fläche ab.

Zwischen dem Gehäuseoberteil 104 und dem Gehäuseunterteil 102 ist in der Figur eine Vielzahl von PTC-Heizeinrichtungen 112 dargestellt, die innerhalb der PTC-Heizeinrichtungen 112 vorgesehene PTC-Elemente aufweisen, die über Leiterbahnen elektrisch leitend kontaktiert sind. Die Leiterbahnen werden über Kontaktzungen 114 elektrisch angeschlossen. Die PTC-Heizeinrichtungen 112 sind steckkontaktiert in dazu vorgesehenen Aufnahmen 116 einer Trennwand 117 des Gehäuseoberteils 104 gehalten. Details dieser Ausgestaltung sind in der auf die Anmelderin zurückgehenden EP 3 334 242 A1 beschrieben.

Zwischen dem Gehäuseunterteil 102 und dem Gehäuseoberteil 104 sind weitere Elemente der Heizvorrichtung 100 dargestellt. Mit Bezugszeichen 118 ist ein Hochvolt-Steckelement gekennzeichnet, das mit dem Gehäuseunterteil 104 verschraubt wird und bis in eine Anschlusskammer 120 des Gehäuseoberteils 104 hineinragende Kontaktelemente aufweist. Diese Kontaktelemente sind mit einer mit Bezugszeichen 122 gekennzeichneten Leiterplatte elektrisch verbunden, die in dem wannenförmigen Gehäuseoberteil 104 aufgenommen werden kann. Mit Bezugszeichen 124 ist eine Dichtung gekennzeichnet, die das Gehäuseunterteil 102 gegenüber dem Gehäuseoberteil 104 und damit die Heizkammer 106 abdichtet.

Ein mit elastischen Vorsprüngen versehenes Halteelement 126 hat die einzelnen PTC-Heizeinrichtungen 112 jeweils einzeln aufnehmende Heizungseinrichtungsaufnahmen 128, die mit der Außenumfangsfläche der einzelnen PTC-Heizeinrichtungen 112 verkrallen. Im montierten Zustand ist das Halteelement 126 auch form- und/oder kraftschlüssig mit dem Gehäuseunterteil 104 verbunden.

Oberhalb des Gehäuseoberteils 104 und unterhalb der Leiterplatte 122 ist eine Kontaktierungseinrichtung 130 angeordnet, die sämtliche Kontaktzungen 114 elektrisch anschließt und einzelnen PTC-Heizeinrichtungen 112 zu Heizkreisen gruppiert. Über von der Kontaktierungseinrichtung 130 abragende Kontaktzungen 132 wird eine elektrische Verbindung zwischen der Kontaktierungseinrichtung 130 und der Leiterplatte 122 hergestellt. Mit der Leiterplatte 122 verbunden und von dieser abragend ist mit Bezugszeichen 134 ein Steuersignal-Steckelement gezeigt. Dieses Steuersignal-Steckelement 134 ist gegen die Leiterplatte 122 verschraubt.

Oberhalb der Leiterplatte 122 ist eine weitere umlaufende Dichtung 136 und ein Steuergehäusedeckel 138 gezeigt, durch welches die Anschlusskammer 120 des Gehäuseoberteils 104 abgedeckt und abgedichtet wird. Der Steuergehäusedeckel 138 ist aus Metall ausgebildet, um zusammen mit dem Gehäuseoberteil 104 elektromagnetische Strahlung abzuschirmen, die durch das Schalten des Leistungsstromes innerhalb des Steuergehäuses 104, 136, 138 entsteht. Zwischen dem Steuergehäusedeckel 138 und der Leiterplatte 122 ist ein Stützgerippe 140 angeordnet, das Kompressionselemente 142 zwischen sich und der Leiterplatte 122 abstützt, um beispielsweise auf der Leiterplatte 122 montierte Leistungstransistoren 308 gegen Kühlflächen anzudrücken, die wärmeleitend mit in die Heizkammer 106 verlängerten Kühldomen verbunden sind. Die Kühlflächen sind wärmeleitend mit den Leistungstransistoren 308 verbunden.

Verbindungsstangen 144 hintergreifen nach der Montage Verriegelungsvorsprünge 146, die an dem Gehäuseunterteil 102 und dem Gehäuseoberteil 104 vorgesehen sind, um die beiden Teile 102, 104 formschlüssig und unverlierbar miteinander zu verbinden. Details hierzu sind in der EP 2 796 804 A1 beschrieben.

Der Steuergehäusedeckel 138 bildet zusammen mit dem Gehäuseoberteil 104 und der Dichtung 136 ein Steuergehäuses 147 aus. Dabei bilden der Steuergehäusedeckel 138 und das Gehäuseoberteil 104 aufgrund ihrer metallischen Werkstoffe eine Abschirmung um die in diesem Steuergehäuses 147 aufgenommene Steuervorrichtung 148, die im Wesentlichen durch die Leiterplatte 122 gebildet ist. Von dem Steuergehäuse 147 ragt in Richtung der Steckelemente 118, 134 ein Anschlussbolzen 150 ab. Dieser Anschlussbolzen 150 dient dem Anschluss des metallischen Steuergehäuses 147 an eine Massephase und ist mit dem Steuergehäuses 147 verschraubt.

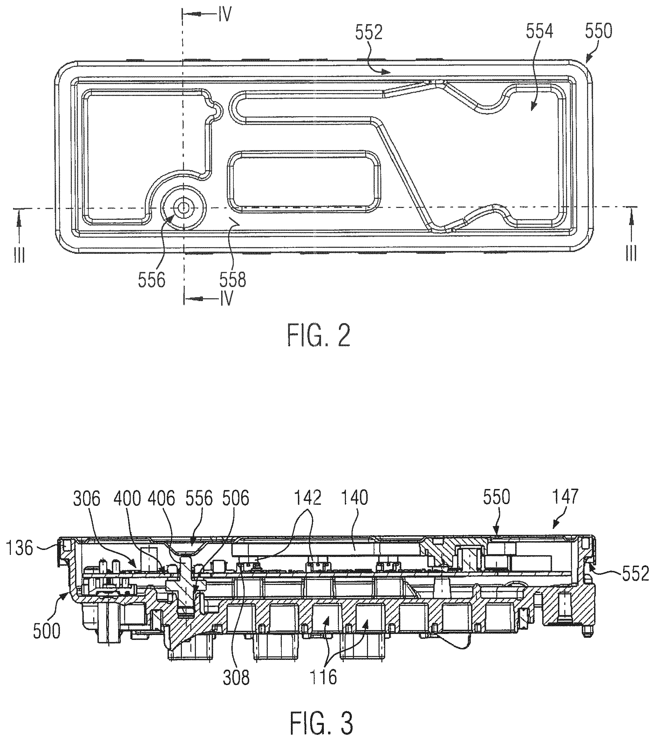

Die Fig. 2 zeigt eine Draufsicht des in Fig. 1 mit Bezugszeichen 138, hier mit Bezugszeichen 550 gekennzeichneten Steuergehäusedeckels, der durch Stanzen und Biegen eines Blechmaterials ausgeformt ist. Die Fig. 2 lässt gewisse Konturen des Deckels erkennen, die zum einen der Versteifung, zum anderen aber auch zur Aufnahme gewisser funktionaler Bauteile dienen. So ist mit Bezugszeichen 552 eine umlaufende Nut gekennzeichnet, die die Dichtung 136 gemäß Fig. 1 in sich aufnimmt. Der mit Bezugszeichen 554 gekennzeichnete Verformungsbereich des Steuergehäusedeckels 500 dient der Aufnahme und Positionierung des in Fig. 1 mit Bezugszeichen 140 gekennzeichneten Stützgerippes. Wie die Zusammenschau der Fig. 2 und 3 ergibt, handelt es sich bei den in Fig. 2 zu erkennenden Konturen auf der Oberseite des Steuergehäusedeckels 550 bis auf die mit Bezugszeichen 556 gekennzeichnete durch Umformen erzeugte Kontur um solche Verformungen, die durch Verformung einer tiefer liegenden Abdeckfläche 558 nach oben, d. h. außen, verformt wurden und dementsprechend bündig mit der oberen Abdeckung der umlaufenden Nut 552 sind.

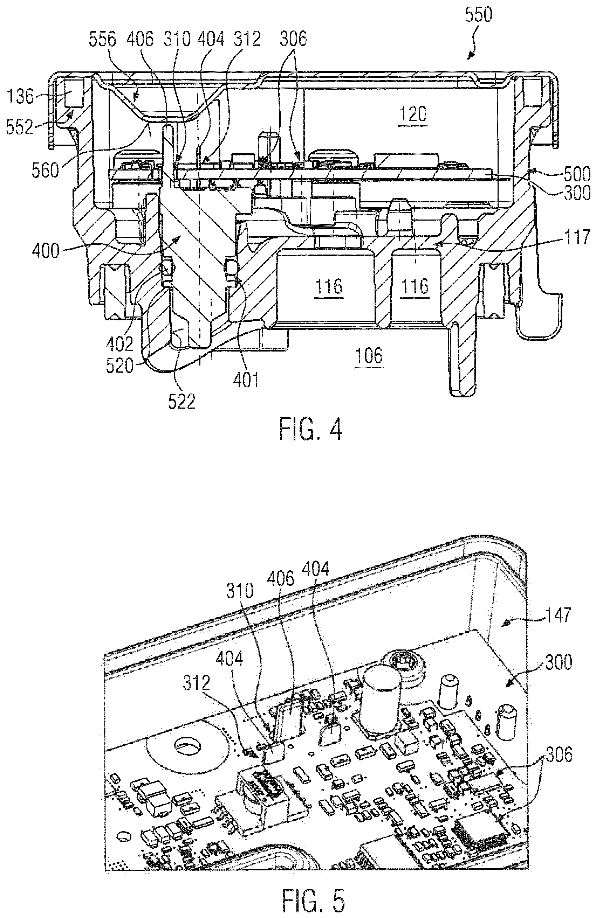

Das Bezugszeichen 556 kennzeichnet einen kegelstumpfförmigen Abstützungsvorsprung, der nach innen hervorragt und eine Abstützfläche 560 für einen Temperaturfühler 400 ausbildet, der in einer Temperaturfühleraufnahme 506 abgedichtet gehalten ist. Hierzu hat der Temperaturfühler 400 eine Temperaturfühlerdichtung 402, die in einer an dem Temperaturfühler 400 außen ausgebildeten umfänglichen Nut 401 aufgenommen ist. An seinem freien in die Anschlusskammer 120 hineinragenden Ende weist der Temperaturfühler 400 zwei Temperaturfühlerkontaktelemente 404 auf (vgl. auch Fig. 5), die von einem Abstützungsvorsprung 406 überragt sind. Die in den Figuren 2 bis 5 mit Bezugszeichen 300 gekennzeichnete Leiterplatte ist mit Bauelementen 306 bestückt, die der Steuerung des Leistungsstromes zu den einzelnen PTC-Heizeinrichtungen 112 dienen. Die Leiterplatte 300 hat eine Führungsbohrung 310 zur Aufnahme des Haltevorsprungs 406 (vgl. Fig. 5).

Dieser Haltevorsprung 406 ist relativ zu der Mitte des Abstützungsvorsprungs 556 des Steuergehäusedeckels 550 ausgerichtet. Die Führungsbohrung 310 umgibt den länglichen Haltevorsprung 406 mit geringem Spiel. Durch die längliche Form des Haltevorsprungs 406 und die korrespondierende Form der Führungsbohrung 310 wird die Leiterplatte 300 relativ zu den Kontaktzungenaufnahmen 312 für die Temperaturfühlerkontaktelemente 404 positioniert.

Die in Fig. 4 mit Bezugszeichen 506 gekennzeichnete Temperaturfühleraufnahme geht über einen Kragen 520 in einen durchmesserkleineren Bereich 522 über, in dem die eigentliche wärmesensitive Messspitze des Temperaturfühlers 400 liegt.

Ersichtlich befindet sich die Temperaturfühlerdichtung 402 in einem zylindrischen Bereich der Temperaturfühleraufnahme 506. Aus Fig. 4 ist ersichtlich, dass der Temperaturfühler 400 zwischen dem Kragen 520 des Gehäuseoberteils 500 und dem Abstützungsvorsprung 556 in axialer Richtung begrenzt ist. So ist es dem Temperaturfühler 400 nur in Grenzen möglich, in axialer Richtung, d. h. in Einführrichtung des Temperaturfühlers 400 in der Temperaturfühleraufnahme 506 verschoben zu werden. Wie Fig. 4 ferner verdeutlicht, hat die Temperaturfühleraufnahme 506 eine leicht konisch zulaufende Öffnung, durch welche die Temperaturfühlerdichtung 402 beim Einführen des Temperaturfühlers 400 in die Temperaturfühleraufnahme 506 zentriert und komprimiert wird. So ist die Temperaturfühlerdichtung 402 in der Aufnahme 506 für den Temperaturfühler 400 verpresst, wodurch sich eine zuverlässige Abdichtung zwischen der Heizkammer 106 und der Anschlusskammer 120 ergibt.

Der Temperaturfühler 400 ist nicht mit dem Gehäuseoberteil 400 verschraubt oder verklebt. Vielmehr ergibt sich dessen Positionierung allein durch die beiden Anschläge, vorliegend gebildet durch den Kragen 520 und den Abstützungsvorsprung 556. Für die Verwirklichung der Erfindung ist es nicht notwendig, dass der Temperaturfühler 400 auch tatsächlich axial beweglich in der Temperaturfühleraufnahme 506 gehalten ist. Bedeutsam ist allein, dass auf eine Verschraubung oder eine Verklebung oder eine sonstige unmittelbare Verbindung zwischen dem Gehäuseoberteil 500 und dem Temperaturfühler 400 verzichtet und dieser lediglich in die Temperaturfühleraufnahme 506 eingeschoben wird, um die notwendige Wechselwirkung zwischen dem Temperaturfühler 400 und dem Gehäuseoberteil 500 zu bewirken. Die Temperaturfühleraufnahme 506 umgibt dementsprechend den Temperaturfühler 400 in Umfangsrichtung. Sie schafft insbesondere eine Anlagefläche für die Temperaturfühlerdichtung 402. Eine auf den Temperaturfühler 400 unmittelbar beidseitig axial wirkende Festlegung des Temperaturfühlers 400 ist indes an dem Gehäuseoberteil 500 nicht vorgesehen. Das Herausgleiten des Temperaturfühlers 400 wird durch die durch die beiden Vorsprünge 520 und 556 gebildeten Anschläge verhindert. Die Abstützung wird dabei durch die Abstützungsfläche 560 bewirkt. Bei dem gezeigten Ausführungsbeispiel ist diese an einem vorspringenden Abstützungsvorsprung 556 ausgeformt. Aber auch andere Gestaltungen sind denkbar, so beispielsweise ein an dem Gehäuseoberteil 500 befestigter Anschlag, der dem Temperaturfühler 400 ganz oder teilweise in Einführrichtung überragt.

### Bezugszeichenliste

- 100: Elektrische Heizvorrichtung
- 102: Gehäuseunterteil
- 104: Gehäuseoberteil
- 106: Heizkammer
- 108: Boden
- 110: Ein-und Auslassstutzen
- 112: PTC-Heizeinrichtungen
- 114: Kontaktzungen
- 116: Aufnahmen
- 117: Trennwand
- 118: Hochvolt-Steckelement
- 120: Anschlusskammer
- 122: Leiterplatte
- 124: Dichtung
- 126: Halteelement
- 128: Heizungseinrichtungsaufnahmen
- 130: Kontaktierungseinrichtung
- 132: Kontaktzungen
- 134: Steuersignal-Steckelement
- 136: Dichtung
- 138: Steuergehäusedeckel
- 140: Stützgerippe
- 142: Kompressionselemente
- 144: Verbindungsstangen
- 146: Verriegelungsvorsprünge
- 147: Steuergehäuse
- 148: Steuervorrichtung
- 150: Anschlussbolzen
- 300: Leiterplatte
- 306: Bauelement
- 308: Leistungstransistor
- 310: Führungsbohrung
- 312: Kontaktzungenaufnahme der Temperaturfühlerkontaktelement 404
- 400: Temperaturfühler
- 401: Nut
- 402: Temperaturfühlerdichtung
- 404: Temperaturfühlerkontaktelement
- 406: Haltevorsprung
- 500: Gehäuseoberteil
- 506: Temperaturfühleraufnahme
- 520: Kragen der Temperaturfühleraufnahme
- 522: durchmesserkleinerer Bereich der Temperaturfühleraufnahme
- 550: Steuergehäusedeckel
- 552: Nut
- 554: Verformungsbereich
- 556: Abstützungsvorsprung
- 558: Abdeckfläche
- 560: Abstützfläche

## Patentansprüche

1. Elektrische Heizvorrichtung (100) mit einem Gehäuse (102; 104) mit einer Trennwand (117), die eine Anschlusskammer (120) von einer Heizkammer (106) zur Abgabe von Wärme trennt und von der zumindest eine PTC-Heizeinrichtung (112) als Heizrippe in Richtung auf die Heizkammer (106) abragt, wobei die PTC-Heizeinrichtung (112) zumindest ein PTC-Element und zur Bestromung des PTC-Elementes mit unterschiedlicher Polarität mit diesem elektrisch leitend verbundene Leiterbahnen, die in der Anschlusskammer (120) elektrisch angeschlossen sind, aufweist, und mit einem Temperaturfühler, der datenmäßig mit einer Steuereinrichtung (148) verbunden und in einer Temperaturfühleraufnahme (506) abgedichtet aufgenommen ist, die in einer die Heizkammer (106) begrenzenden Wand (117) ausgeformt ist, **dadurch gekennzeichnet, dass** zumindest ein Temperaturfühlerkontaktelement (404) des Temperaturfühlers (400) in der Anschlusskammer (120) freiliegt und mit einer in der Anschlusskammer (120) angeordneten Leiterplatte (300) steckkontaktiert ist.

2. Elektrische Heizvorrichtung nach Anspruch 1, **dadurch gekennzeichnet, dass** der Temperaturfühler (400) zumindest ein Temperaturfühlerkontaktelement (404), das in einer Leiterplatte (300) steckkontaktiert ist, und einen Haltevorsprung (406) aufweist, der die Leiterplatte (300) durchragt und in einer Führungsbohrung (310) aufgenommen ist, die in der Leiterplatte (300) ausgespart.

3. Elektrische Heizvorrichtung nach einem der vorherigen Ansprüche, **dadurch gekennzeichnet, dass** eine Abstützung (556, 560) auf einer der Heizkammer (106) und der Wand (117) gegenüberliegenden Seite vorgesehen ist.

4. Elektrische Heizvorrichtung nach Anspruch 3, **dadurch gekennzeichnet, dass** die Abstützung (560) an einem Gehäusedeckel (550) vorgesehen, der eine die Leiterplatte (300) aufnehmende Kammer (120) abdeckt.

5. Elektrische Heizvorrichtung nach Anspruch 4, **dadurch gekennzeichnet, dass** der Gehäusedeckel (550) mit einem die Leiterplatte (300) zwischen sich und dem Gehäusedeckel (550) einschließenden Gehäuseoberteil (500) formschlüssig verbunden ist.

6. Elektrische Heizvorrichtung nach Anspruch 4 oder 5, **dadurch gekennzeichnet, dass** der Gehäusedeckel (550) aus einem stanz-biegebearbeiteten Blech gebildet ist, das einen in Richtung auf den Temperaturfühler (400) vorspringenden Abstützungsvorsprung (556) aufweist, der mit einem Haltevorsprung (406) des Temperaturfühlers (400) zusammenwirkt.

7. Elektrische Heizvorrichtung nach einem der vorherige Ansprüche, **dadurch gekennzeichnet, dass** der Temperaturfühler (400) gleitend in der Temperaturfühleraufnahme (506) aufgenommen ist und an dem Temperaturfühler (400) eine mit dem Temperaturfühler (400) zusammenwirkende Abstützung (556, 560) vorgesehen ist, die ein Herausgleiten des Temperaturfühlers (400) aus der Temperaturfühleraufnahme (506) verhindert.

## Claims

1. Electrical heating device (100) with a housing (102; 104) with a partition wall (117) which separates a connection chamber (120) from a heating chamber (106) for emitting heat and from which at least one PTC heating device (112) projects as a heating fin in the direction of the heating chamber (106), the PTC heating device (112) having at least one PTC element and conductor paths which are electrically conductively connected to the PTC element for energizing the PTC element with different polarity and which are electrically wired in the connection chamber (120), and with a temperature sensor which is connected in terms of data to a control device (148) and is accommodated in a sealed manner in a temperature sensor receptacle (506) which is formed in a wall (117) delimiting the heating chamber (106), **characterized in that** at least one temperature sensor contact element (404) of the temperature sensor (400) is exposed in the connection chamber (120) and is in plug-in contact with a printed circuit board (300) arranged in the connection chamber (120).

2. Electrical heating device according to claim 1, **characterized in that** the temperature sensor (400) has at least one temperature sensor contact element (404), which is in plug-in contact in a printed circuit board (300), and a retaining projection (406), which projects through the printed circuit board (300) and is accommodated in a guide bore (310), which is recessed in the printed circuit board (300).

3. Electrical heating device according to one of the preceding claims, **characterized in that** a support (556, 560) is provided on a side opposite the heating chamber (106) and the wall (117).

4. Electrical heating device according to claim 3, **characterized in that** the support (560) is provided on a housing cover (550) which covers a chamber (120) accommodating the printed circuit board (300).

5. Electrical heating device according to claim 4, **characterized in that** the housing cover (550) is positively connected to an upper housing part (500) enclosing the printed circuit board (300) between itself and the housing cover (550).

6. Electrical heating device according to claim 4 or 5, **characterized in that** the housing cover (550) is formed from a stamped and bent sheet metal which has a supporting projection (556) which projects in the direction of the temperature sensor (400) and cooperates with a retaining projection (406) of the temperature sensor (400).

7. Electrical heating device according to one of the preceding claims, **characterized in that** the temperature sensor (400) is slidably received in the temperature sensor receptacle (506) and a support (556, 560) cooperating with the temperature sensor (400) is provided on the temperature sensor (400), which support prevents the temperature sensor (400) from sliding out of the temperature sensor receptacle (506).

## Revendications

1. Dispositif de chauffage électrique (100) comportant un boîtier (102 ; 104) avec une cloison de séparation (117) qui sépare une chambre de connexion (120) d'une chambre de chauffage (106) pour l'émission de chaleur et à partir de laquelle fait saillie au moins un dispositif de chauffage (112) à coefficient de température positif, CTP, sous forme d'une ailette de chauffage en direction de la chambre de chauffage (106), dans lequel le dispositif de chauffage CTP (112) comporte au moins un élément CTP et, pour l'alimentation de l'élément CTP, des pistes électroconductrices connectées à celui-ci à polarités différentes, qui sont branchées électriquement dans la chambre de connexion (120), et un capteur de température relié par une connexion de données à un dispositif de commande (148) et scellé dans un réceptacle de capteur de température (506) formé dans une paroi (117) délimitant la chambre de chauffage (106), **caractérisé en ce qu'**au moins un élément de contact (404) du capteur de température (400) est exposé dans la chambre de connexion (120) et est connecté par une fiche à un circuit imprimé (300) agencé dans la chambre de connexion (120).

2. Dispositif de chauffage électrique selon la revendication 1, **caractérisé en ce que** le capteur de température (400) comporte au moins un élément de contact de capteur de température (404) qui est branché par une fiche dans un circuit imprimé (300), ainsi qu'une projection de retenue (406) qui traverse le circuit imprimé (300) et est reçue dans un trou de guidage (310) percé dans le circuit imprimé (300).

3. Dispositif de chauffage électrique selon l'une des revendications précédentes, **caractérisé en ce qu'**un support (556, 560) est pourvu sur un côté opposé à la chambre de chauffage (106) et à la paroi (117).

4. Dispositif de chauffage électrique selon la revendication 3, **caractérisé en ce que** le support (560) est pourvu sur un couvercle de boîtier (550) qui recouvre une chambre (120) recevant le circuit imprimé (300).

5. Dispositif de chauffage électrique selon la revendication 4, **caractérisé en ce que** le couvercle de boîtier (550) est connecté par engagement de forme à une partie supérieure du boîtier (500) renfermant le circuit imprimé (300) entre elle et le couvercle de boîtier (550).

6. Dispositif de chauffage électrique selon la revendication 4 ou 5, **caractérisé en ce que** le couvercle de boîtier (550) est formé à partir d'une tôle estampée et pliée qui comporte une projection de support (556) faisant saillie en direction du capteur de température (400) et interagissant avec une projection de retenue (406) du capteur de température (400).

7. Dispositif de chauffage électrique selon l'une des revendications précédentes, **caractérisé en ce que** le capteur de température (400) est reçu par coulissement dans le réceptacle du capteur de température (506), et **en ce qu'**un support (556, 560) est pourvu sur le capteur de température (400) qui interagit avec le capteur de température (400) et empêche le capteur de température (400) de glisser hors du réceptacle du capteur de température (506).
